# EUROPÄISCHE PATENTSCHRIFT

(11) **EP 3 769 140 B1**
(45) Veröffentlichungstag und Bekanntmachung des Hinweises auf die Patenterteilung: **15.09.2021**
(21) Anmeldenummer: 19714305.0
(22) Anmeldetag: 18.03.2019
(51) Int. Cl.: G02B 23/24, F21V 29/58, F21V 29/60, F21Y 101/00, F21Y 115/10

(54) **BELEUCHTUNGSEINHEIT FÜR INNENRÄUME VON MASCHINEN**
LIGHTING UNIT FOR INTERIORS OF MACHINES
UNITÉ D'ÉCLAIRAGE INTÉRIEUR POUR MACHINES

(30) Priorität: 20.03.2018 AT 502332018
(43) Veröffentlichungstag der Anmeldung: 27.01.2021
(73) Patentinhaber: AVL List GmbH, 8020 Graz (AT)
(72) Erfinder: JOCHAM, Bernhard, 8565 SÖDING - ST. JOHANN (AT); PHILIPP, Harald, 8071 HAUSMANNSTÄTTEN (AT)
(74) Vertreter: Babeluk, Michael
(86) Internationale Anmeldenummer: PCT/AT2019/060089
(87) Internationale Veröffentlichungsnummer: WO 2019/178625

(56) Entgegenhaltungen:
- WO-A1-2014/031955
- DE-A1- 3 421 106
- JP-A- 2007 093 857
- JP-A- 2007 105 279
- US-A1- 2006 216 865

## Beschreibung

Die Erfindung betrifft eine Beleuchtungseinheit für Innenräume von Maschinen, insbesondere von Brennkraftmaschinen, wobei die Beleuchtungseinheit ein Gehäuse aufweist, in welchem zumindest eine durch eine LED-Lampe gebildete Lichtquelle angeordnet ist, wobei das Gehäuse zur Kühlung der Lichtquelle eine Kühlkanalanordnung, insbesondere für eine Kühlflüssigkeit, aufweist, wobei ein Kühlabschnitt der Kühlkanalanordnung im Bereich der Lichtquelle angeordnet ist. Weiters betrifft die Erfindung ein Verfahren zum Ausleuchten von Innenräumen von Maschinen mit einer derartigen Beleuchtungseinheit.

Beleuchtungseinheiten werden beispielsweise eingesetzt, um in Innenräumen von Maschinen, beispielsweise in Brennräumen von Brennkraftmaschinen, Beobachtungen und/oder optische Aufzeichnungen vorzunehmen. In der DE 34 21 106 A1 wird beispielsweise eine Einrichtung zum Beleuchten des Brennraumes einer Brennkraftmaschine eingesetzt, welche eine hinter einem Brennraumfenster angeordnete Blitzlampe aufweist. Derartige Beleuchtungseinheiten benötigen allerdings relativ viel Bauraum und somit relativ große Inspektionsöffnungen und sind überdies fehleranfällig.

Des Weiteren ist aus der DE 20 2004 000 542 U1 eine Beleuchtungseinheit mit einer außerhalb eines Inspektionskanals angeordneten Lichtquelle bekannt, deren Licht über eine Einkoppeloptik und Lichtleiter dem zu beobachtenden Hohlraum zugeführt wird. Nachteilig ist, dass es durch die Einkoppelung zu relativ hohen Verlusten kommt, wodurch nur ein geringer Teil der in der Lichtquelle erzeugten Lichtstärke genutzt werden kann.

Aus der US 8,713,999 B2 ist ein optisches Inspektionsendoskop zur zerstörungsfreien internen Inspektion von Leistungserzeugungsmaschinen, wie Brennkraftmaschinen, Gasturbinen, Dampfturbinen, Generatoren oder dergleichen bekannt, welches durch einen entsprechenden internen Kanal in Hohlräume der Leistungserzeugungsmaschine eingeführt werden kann. Das Endoskopsystem weist einen gekühlten Kamerakopf auf, in welchem Kameras und durch LED gebildete Lichtquellen angeordnet sind.

Die JP 2007 105 279 A offenbart ein hitzebeständiges Endoskop mit einer Beleuchtungseinheit, die eine durch eine LED gebildete Lichtquelle im Bereich eines Endes eines stabförmigen Gehäuses aufweist. Zur Kühlung der Lichtquelle ist eine Kühlkanalanordnung mit einem Kühlabschnitt im Bereich der Lichtquelle vorgesehen. Im Bereich des zweiten Endes des Gehäuses ist ein Anschluss zur Verbindung des Kühlkanals mit einer Abfuhrleitung angeordnet. Die JP 2007 093 857 A zeigt eine ähnliche Beleuchtungseinheit.

Aufgabe der Erfindung ist es, ein kompaktes Beleuchtungssystem mit hohen Lichtstärken bereitzustellen, welches insbesondere bei hohen Umgebungstemperaturen eingesetzt werden kann.

Erfindungsgemäß wird diese Aufgabe durch eine eingangs beschriebene Beleuchtungseinheit dadurch gelöst, dass die LED-Lampe gepulst betrieben wird. Das gepulste Betreiben der LED-Lampe ermöglicht im Gegensatz zu bekannten Lösungen eine besonders hohe Lichtausbeute. Die beim gepulsten Betrieb erhöhte Wärmefreisetzung kann problemlos mit der Kühlkanalanordnung kontrolliert werden.

Das Gehäuse ist vorteilhafterweise im Wesentlichen stabförmig ausgebildet und weist ein erstes Ende und ein zweites Ende auf, wobei im Bereich des ersten Endes die Lichtquelle angeordnet ist. Durch die langestreckte sondenartige Ausführung lässt sich die Lichtquelle problemlos in einen schmalen Beobachtungskanal einer Maschine einführen.

In einer Ausführungsvariante ist vorgesehen, dass zwischen dem zweiten Ende des Gehäuses und dem Kühlabschnitt zumindest ein Kühlkanal, vorzugsweise zwei Kühlkanäle der Kühlkanalanordnung im Gehäuse angeordnet sind. Vorzugsweise ist im Bereich des zweiten Endes des Gehäuses zumindest ein Anschluss zur Verbindung zumindest eines Kühlkanals der Kühlkanalanordnung mit einer Zuführ- und/oder Abführleitung angeordnet. Die Versorgung der Beleuchtungseinheit mit Kühlmittel, beispielsweise Kühlflüssigkeit, erfolgt im Bereich des der Lichtquelle abgewandten zweiten Ende des Gehäuses, welches im eingebauten Zustand aus dem Beobachtungskanal der Maschine herausragt, während die Lichtquelle selbst tief im Beobachtungsfenster, also direkt am Beobachtungsort platziert ist. Somit lässt sich am Beobachtungsort eine optimale Lichtausbeute und trotzdem eine effektive Wärmeabfuhr realisieren.

In einer einfach fertigbaren und leicht montier- und demontierbaren Ausführungsvariante der Erfindung ist vorgesehen, dass das Gehäuse mehrteilig ausgebildet ist und im Bereich des ersten Endes zumindest einen Kühlkörper, im Bereich des zweiten Endes zumindest einen Anschlusskörper und zwischen dem Kühlkörper und dem Anschlusskörper zumindest einen im Wesentlichen rohrförmigen Tragkörper aufweist. Vorzugsweise ist vorgesehen, dass der Kühlkörper in den Tragkörper eingepresst, eingeklebt oder eingeschraubt ist. Dies ermöglicht einen einfachen Zusammenbau.

Vorteilhaft ist es, wenn der Anschluss im Anschlusskörper angeordnet ist, wobei vorzugsweise der Anschlusskörper zumindest eine Leitungsdurchführung, besonders vorzugsweise eine Kabelführungsöffnung aufweist. Somit kann - Teile sparend - sowohl die Kühlmittelversorgung, als auch die Stromversorgung über den Anschlussteil erfolgen.

In einer Ausführungsvariante der Erfindung ist vorgesehen, dass ein Kühlkörper im Bereich der Lichtquelle zwei als Durchgangsbohrungen ausgebildete Teilkühlkanäle aufweist, welche parallel zur Längsachse des Gehäuses angeordnet sind und in einen im Kühlkörper im Kühlabschnitt angeordneten Kühlraum einmünden, wobei vorzugsweise der Kühlraum thermisch direkt oder indirekt an die Platine der Lichtquelle grenzt. Dies ermöglicht eine besonders effektive Wärmeabfuhr.

In einer anderen Ausführungsvariante der Erfindung ist vorgesehen, dass der Kühlkörper zwei als Sackbohrungen ausgebildete Teilkühlkanäle aufweist, welche sich im Kühlabschnitt schneiden. Probleme durch direkte Kontaktierung der Platine durch das Kühlmittel, wie beispielsweise Kurzschlussströme oder Fehlerströme, können somit wirkungsvoll vermieden werden.

Um die Lichtquelle sicher mit Strom zu versorgen ist es zweckmäßig, wenn Kabelkanäle im Kühlkörper räumlich getrennt zu den Teilkühlkanälen angeordnet sind. Günstigerweise ist daher in einer Variante der Erfindung zumindest eine Leitungsführung für eine elektrische Leitung in einem Kühlkörper im Bereich der Lichtquelle räumlich getrennt zu den Teilkühlkanälen angeordnet, wobei vorzugsweise zumindest eine Leitungsführung durch eine - im Wesentlichen parallel zur Längsachse des Gehäuses ausgebildete Nut oder Bohrung gebildet ist.

Die oben beschriebene Aufgabe wird des Weiteren mit dem eingangs beschriebenen Verfahren erfindungsgemäß dadurch gelöst, dass die LED-Lampe gepulst betrieben wird.

Die Erfindung wird im Folgenden anhand der in den nicht einschränkenden Figuren gezeigten Ausführungsbeispiele näher erläutert. Darin zeigen:
- Fig. 1: eine erfindungsgemäße Beleuchtungseinheit in einer ersten Ausführungsvariante in einer teilweise transparenten Seitenansicht;
- Fig.2: die Beleuchtungseinheit in einem Schnitt gemäß der Linie II - II in Fig. 1;
- Fig.3: das Detail III der in Fig. 2 gezeigten Beleuchtungseinheit;
- Fig.4: die Beleuchtungseinheit in einem Schnitt gemäß der Linie IV - IV in Fig. 2;
- Fig.5: das Detail V der in Fig. 4 gezeigten Beleuchtungseinheit;
- Fig. 6: eine frontseitige Schrägansicht eines Kühlkörpers des erfindungsgemäßen Beleuchtungskörpers in einer zweiten Ausführungsvariante;
- Fig. 7: eine Ansicht dieses Kühlkörpers auf die den Kühlabschnitt aufweisende erste Stirnseite;
- Fig. 8: eine rückseitige Schrägansicht dieses Kühlkörpers;
- Fig. 9: eine Seitenansicht dieses Kühlkörpers;
- Fig. 10: den Kühlkörper in einem Schnitt gemäß der Linie X - X in Fig. 9;
- Fig. 11: eine Ansicht dieses Kühlkörpers auf die dem Kühlabschnitt abgewandte zweite Stirnseite;
- Fig. 12: den Kühlkörper in einem Schnitt gemäß der Linie XII - XII in Fig. 11;
- Fig. 13: den Kühlkörper in einem Schnitt gemäß der Linie XIII - XIII in Fig. 11;
- Fig. 14: eine frontseitige Schrägansicht eines Kühlkörpers des erfindungsgemäßen Beleuchtungskörpers in einer dritten Ausführungsvariante;
- Fig. 15: eine Ansicht dieses Kühlkörpers auf die den Kühlabschnitt aufweisende erste Stirnseite;
- Fig. 16: eine rückseitige Schrägansicht dieses Kühlkörpers;
- Fig. 17: eine Ansicht dieses Kühlkörpers auf die dem Kühlabschnitt abgewandte zweite Stirnseite;
- Fig. 18: den Kühlkörper in einem Schnitt gemäß der Linie XVIII - XVIII in Fig. 17;
- Fig. 19: den Kühlkörper in einem Schnitt gemäß der Linie XIX - XIX in Fig. 17;
- Fig. 20: einen Kühlkörper in einem Längsschnitt analog zu Fig. 18 in einer vierten Ausführungsvariante, gemäß der Linie XX in Fig. 21;
- Fig. 21: eine Ansicht dieses Kühlkörpers auf die den Kühlabschnitt aufweisende erste Stirnseite;
- Fig. 22: den Kühlkörper in einem Längsschnitt gemäß der Linie XXII in Fig. 21;
- Fig. 23: einen Kühlkörper in einem Längsschnitt analog zu Fig. 20 in einer fünften Ausführungsvariante;
- Fig. 24: einen Kühlkörper in einem Längsschnitt analog zu Fig. 20 in einer sechsten Ausführungsvariante; und
- Fig. 25: einen Zylinder einer Brennkraftmaschine im Längsschnitt mit einer erfindungsgemäßen Beleuchtungseinheit.

Funktionsgleiche Teile sind in den Figuren der Ausführungsvarianten mit jeweils gleichen Bezugszeichen bezeichnet.

Die in den Figuren gezeigte Beleuchtungseinheit 1 weist ein im Wesentlichen stabförmiges langgestrecktes Gehäuse 2 mit einem ersten Ende 3 und einem zweiten Ende 4 auf, wobei im Bereich des ersten Endes 3 eine durch eine LED-Lampe 5 gebildete Lichtquelle 6 angeordnet ist, welche kontinuierlich oder getaktet betrieben werden kann. Die Längsachse des Gehäuses 2 ist mit 2a bezeichnet. Zur Kühlung der LED-Lampe 5 ist im Gehäuse 2 der Beleuchtungseinheit 1 eine Kühlkanalanordnung 7 mit ersten 11 und zweiten Kühlkanälen 12 angeordnet, welche sich zwischen einem an die LED-Lampe 5 grenzenden Kühlabschnitt 8 und ersten 9 und zweiten Anschlüssen 10 für ein Kühlmedium erstrecken, welche im Bereich des dem ersten Ende 3 abgewandten zweiten Endes 4 des Gehäuses 2 angeordnet sind. Die ersten 9 und zweiten Anschlüsse 10 dienen zur Verbindung von ersten Kühlkanälen 11 und zweiten Kühlkanälen 12 der Kühlkanalanordnung 7 mit einer nicht weiter dargestellten Zuführ- oder Abführleitung für das Kühlmedium, welche eine Flüssigkeit - zum Beispiel Wasser - oder ein Gas - zum Beispiel Luft - sein kann. Zur Feststellung von eventuell auftretenden Leckagen des Kühlmediums kann in der Zuführleitung ein nicht weiter dargestellter Strömungswächter vorgesehen sein, welcher die Durchflussmenge des Kühlmediums überwacht.

Das Gehäuse 2 ist mehrteilig ausgeführt und weist im Bereich des ersten Endes 3 zumindest einen Kühlkörper 13, im Bereich des zweiten Endes 4 zumindest einen Anschlusskörper 15 und zwischen dem Kühlkörper 13 und dem Anschlusskörper 15 zumindest einen im Wesentlichen rohrförmigen Tragkörper 14 auf. Der Kühlkörper 13 ist in den rohrförmigen Tragkörper 14 eingeschraubt, eingeklebt oder eingepresst.

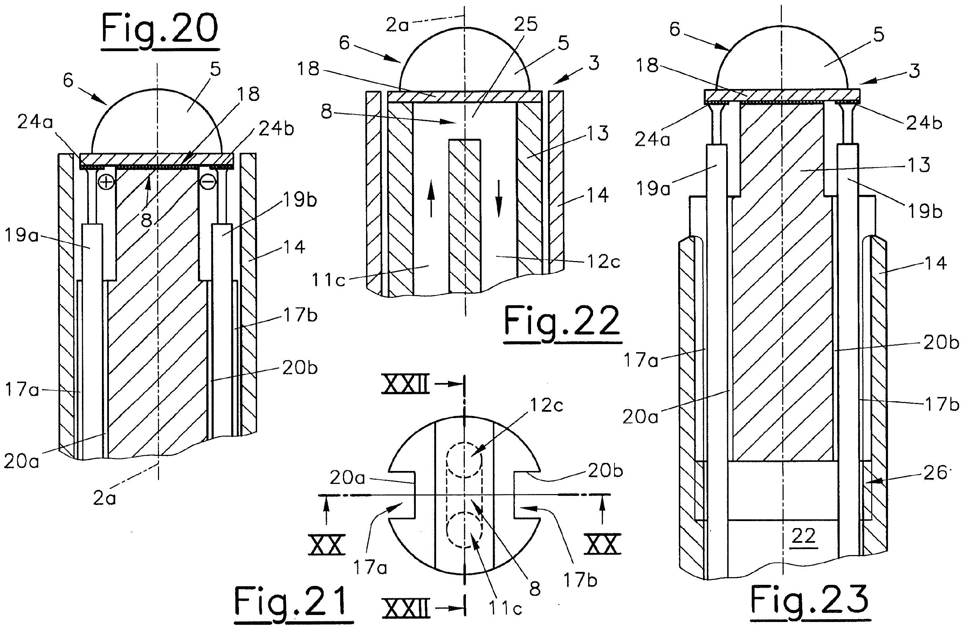

Im Anschlusskörper 15 sind der erste Anschluss 9 und der zweite Anschluss 10 angeordnet, wobei vom ersten Anschluss 9 der erste Kühlkanal 11 und vom zweiten Anschluss 10 der zweite Kühlkanal 12 ausgeht. Weiters weist der Anschlusskörper 15 eine Leitungsdurchführung 16 für - in Fig. 20, Fig. 23 und Fig. 24 ersichtliche - elektrische Leitungen 19a, 19b auf, welche die LED-Lampe 5 elektrisch mit einem nicht weiter dargestellten Netzgerät verbinden. Die Leitungsdurchführung 16 ist in den dargestellten Ausführungen durch eine Bohrung gebildet. Die elektrischen Leitungen 19a, 19b dienen zur Stromversorgung der LED-Lampe 5 und führen zu einer im Bereich des ersten Endes 3 angeordneten Platine 18. Die Platine 18 der LED-Lampe 5 grenzt an den Kühlabschnitt 8 der Kühlkanalanordnung 7.

Der erste Kühlkanal 11 wird durch die erste Anschlussbohrung 11a des ersten Anschlusses 9, durch einen ersten Verbindungsströmungsweg 11b und einen im Kühlkörper 13 angeordneten ersten Teilkühlkanal 11c gebildet. Der erste Verbindungsströmungsweg 11b ist als Rohrleitung innerhalb des Tragkörpers 14 ausgebildet, welche einerseits mit der ersten Anschlussbohrung 11a und andererseits mit dem ersten Teilkühlkanal 11c verbunden ist.

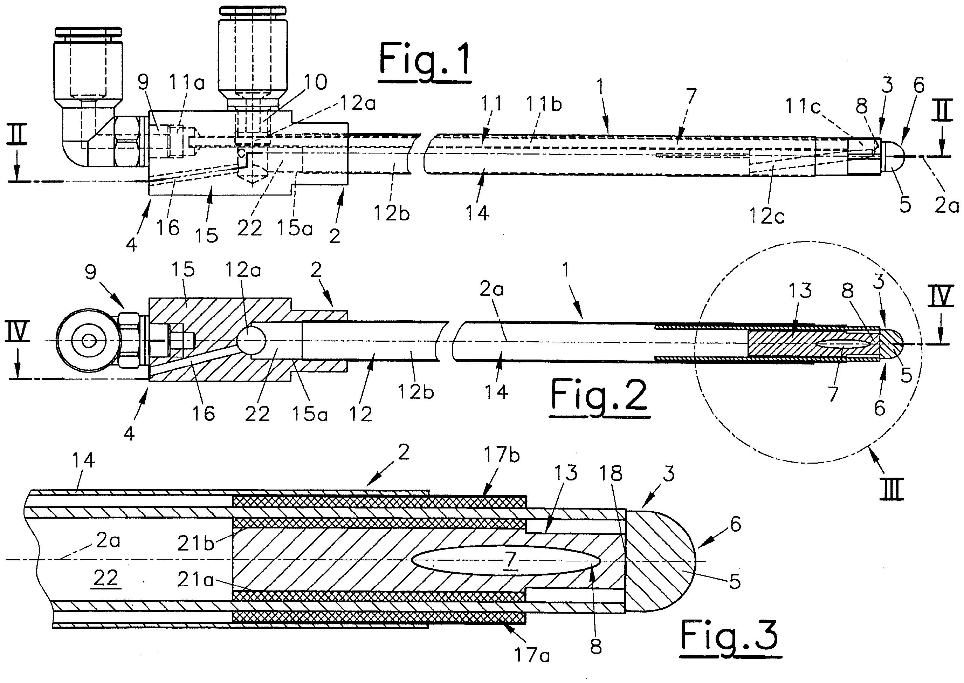

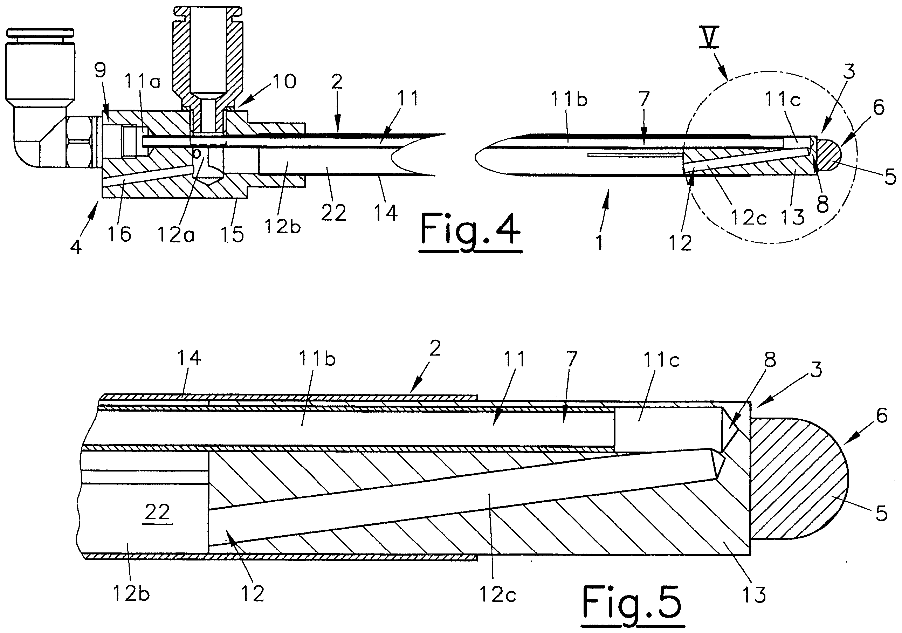

Der Tragkörper 14 ist in eine durch eine Bohrung gebildete Aufnahme 15a des Anschlusskörpers 15 eingesteckt und durch Kleben, Schrauben oder Pressen mit dieser fest verbunden. Die Aufnahme 15a und der durch ein Rohr gebildete Tragkörper 14 spannen einen Hohlraum 22 auf, in welchen im in den Fig. 1 bis Fig. 5 dargestellten ersten Ausführungsbeispiel einerseits eine vom zweiten Anschluss 10 ausgehende zweite Anschlussbohrung 12a, und andererseits die Leitungsdurchführung 16 einmünden. Der zweite Kühlkanal 12 wird somit durch die zweite Anschlussbohrung 12a des zweiten Anschlusses 10, durch einen den Hohlraum 14a des Tragkörpers 14 gebildeten Verbindungsströmungsweg 12b und durch einen im Kühlkörper 13 angeordneten zweiten Teilkühlkanal 12c gebildet.

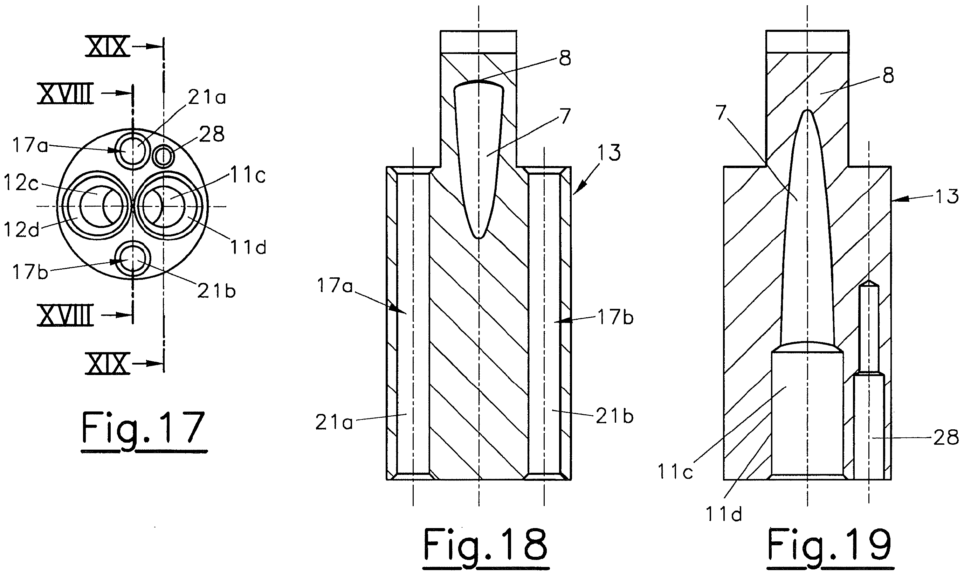

Die Führung der elektrischen Leitungen 19a, 19b erfolgt im Kühlkörper 13 in räumlich getrennt zu den Teilkühlkanälen 11a, 12a angeordneten Leitungsführungen 17a, 17b, welche räumlich getrennt zu den ersten 11c und zweiten Teilkühlkanälen 12c angeordneten sind. Die Leitungsführungen 17a, 17b können durch in den Kühlkörper 13 parallel zur Längsachse 2a eingeformte Nuten 20a, 20b (siehe Fig. 20, Fig. 21, Fig. 23) oder durch Bohrungen 21a, 21b (siehe Fig. 3, Fig. 18, Fig. 24) gebildet sein.

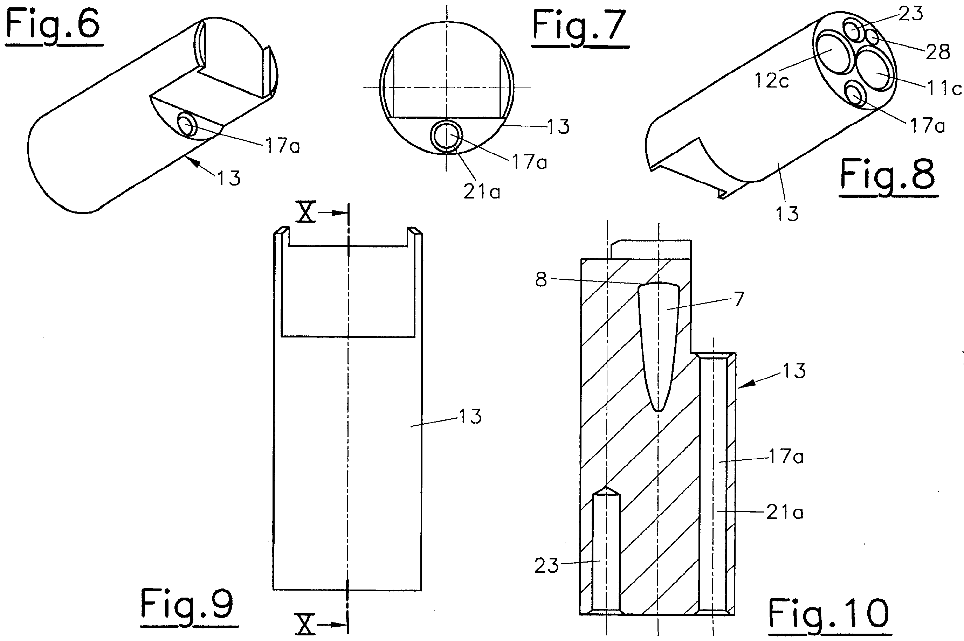

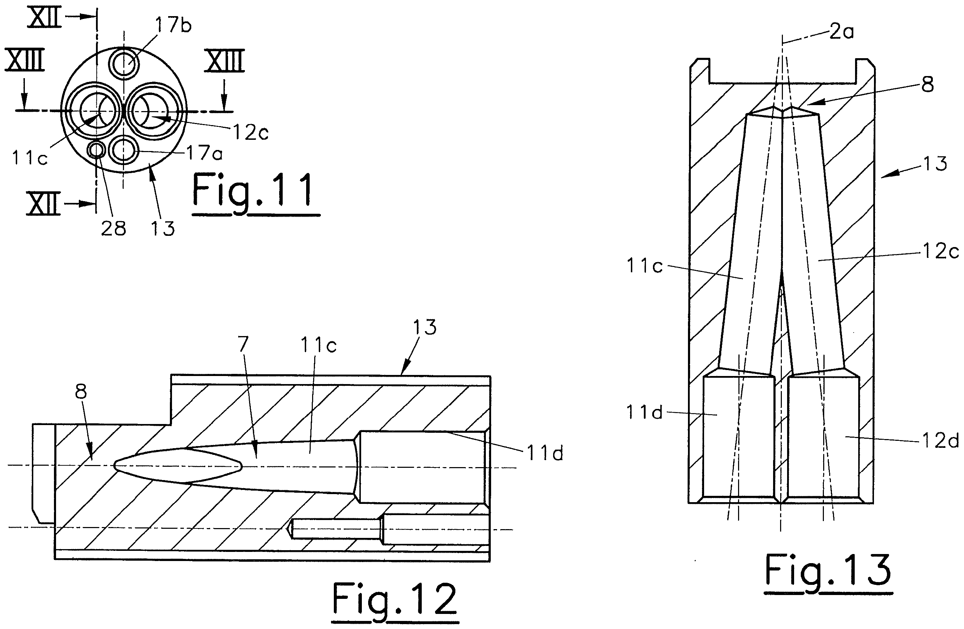

Die Fig. 6 bis Fig. 13 zeigen einen Kühlkörper 13 für eine zweite Ausführungsvariante einer Beleuchtungseinheit 1, welche sich demgemäß in der Gestaltung des im Wesentlichen zylindrischen Kühlkörpers 13 von der in den Fig. 1 bis Fig. 5 dargestellten ersten Ausführung unterscheidet. Der Kühlkörper 13 weist nur eine den Kühlkörper in Längsrichtung durchdringende Leitungsführung 17a auf, um eine zur Platine 18 der LED-Lampe 5 führende elektrische Leitung 19a (in den Fig. 6 bis Fig. 13 nicht dargestellt) aufzunehmen. Der zweite elektrische Leiter kann durch den Kühlkörper 13 selbst gebildet sein, welcher mit der Platine 18 entsprechend elektrisch verbunden ist. Die elektrische Verbindung zwischen der Stromversorgung und dem Kühlkörper 13 kann über die eine Kontaktbohrung 23 erfolgen, welche beispielsweise zur Aufnahme einer Elektrode geeignet ist. Weiters weist der Kühlkörper 13 eine Bohrung 28 zur Aufnahme eines nicht weiter dargestellten Thermoelementes auf, mit welchem die Betriebstemperatur überwacht werden kann.

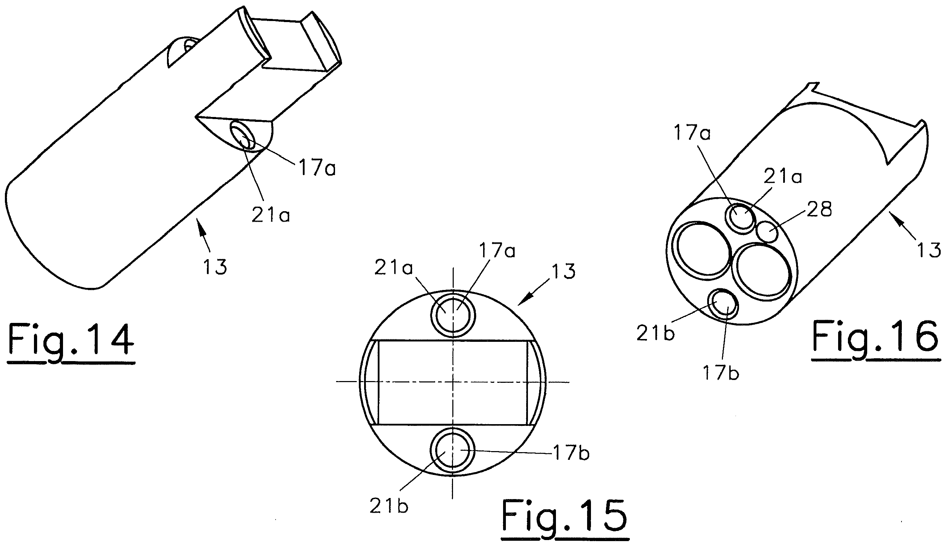

Bei der in den Fig. 14 bis Fig. 19 dargestellten dritten Ausführungsvariante sind zwei diametral bezüglich der Längsachse 2a angeordnete Leitungsführungen 17a, 17b vorgesehen, welche durch Bohrungen parallel zur Längsachse 2a gebildet sind.

Sowohl bei der zweiten, als auch bei der dritten Ausführungsvariante sind beide sich schneidenden Teilkühlkanäle 11c, 12c jeweils in ihren Anfangsbereichen mit zylindrischen Buchsen 11d, 12d ausgeführt, um eine durch eine Rohrleitung gebildeten Verbindungsströmungsweg 11b, 12b aufzunehmen.

Die Fig. 20 bis Fig. 22 zeigen eine vierte Ausführungsvariante eines Kühlkörpers 13 einer erfindungsgemäßen Beleuchtungseinheit 1, wobei die Leitungsführungen 17a, 17b zur Aufnahme der elektrischen Leitungen 19a, 19b durch am äußeren Umfang des Kühlkörpers 13 diametral und parallel zur Längsachse 2a eingeformte Nuten gebildet sind. Mit Bezugszeichen 24a, 24b sind gelötete Verbindungen zwischen den elektrischen Leitungen 19a, 19b und der Platine 18 bezeichnet. Wie aus Fig. 22 hervorgeht, sind der erste Teilkühlkanal 11c und der zweite Teilkühlkanal 12c parallel zur Längsachse 2a in den Kühlkörper 13 eingeformt und münden in einen in den Kühlkörper 13 eingeformten und an die Platine 18 grenzenden Kühlraum 25, welcher den Kühlabschnitt 8 der Kühlanordnung 7 bildet.

Fig. 23 zeigt eine fünfte Ausführungsvariante der Erfindung, bei der der Kühlkörper 13 und der Tragkörper 14 miteinander verschraubt sind, wobei mit Bezugszeichen 26 das Gewinde der Schraubverbindung angedeutet ist.

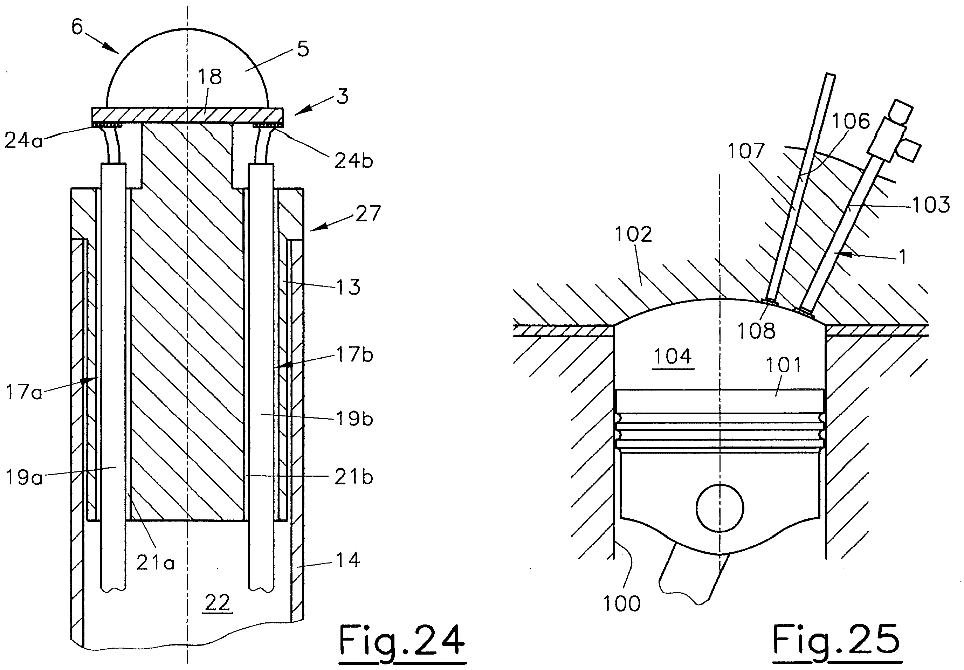

In Fig. 24 ist eine sechste Ausführung einer erfindungsgemäßen Beleuchtungseinheit 1 dargestellt, bei der die Leitungsführungen 17a, 17b im Kühlkörper 13 durch Bohrungen 21a, 21b parallel zur Längsachse 2a gebildet sind. Der Kühlkörper 13 weist dabei einen in radialer Richtung den Anschlusskörper 15 überragenden Vorsprung 27 auf, welcher beim Zusammenbau des Kühlkörpers 13 und des Tragkörpers 14 als Anschlag fungiert. Dies ermöglicht eine exakte Positionierung der beiden Teile relativ zueinander.

Die Fig. 25 zeigt als Anwendungsbeispiel der Erfindung einen Zylinder 100 einer Brennkraftmaschine mit einem hin- und hergehenden Kolben 101, wobei eine erfindungsgemäße Beleuchtungseinheit 1 über eine im Zylinderkopf 102 angeordnete erste Bohrung 103 an den Brennraum 104 herangeführt und durch ein erstes Brennraumfenster 105 von diesem getrennt ist. Die LED-Lampe 5 und die Kondensoroptik der Beleuchtungseinheit 1 ist an die Größe der ersten Bohrung angepasst, welche beispielsweise 7 mm betragen kann.

In einer weiteren Bohrung 106 des Zylinderkopfes 102 ist weiters ein optischer Sensor 107 angeordnet, welcher über ein zweites Fenster 108, das die zweite Bohrung 106 vom Brennraum 104 trennt, optisch mit dem Brennraum 104 verbunden ist.

Die Kühlung der LED-Lampe 5 ermöglicht eine Brennraumnahe Anordnung. Dadurch, dass die Beleuchtungseinheit 1 direkt im Bereich des Brennraumfensters 105 angeordnet werde können Einkoppeloptik und Lichtleiter entfallen und somit Verluste durch Einkoppelung vermieden werden. Dies ermöglicht es, hohe Beleuchtungsstärken vor dem Beleuchtungsfenster 105 zur Verfügung stellen.

Die LED-Lampe 5 der Beleuchtungseinheit 1 wird bevorzugt gepulst betrieben, um besonders hohe Lichtausbeute zu ermöglichen. Durch Kühlung und Pulsbetrieb ist ein Betrieb der LED-Lampe 5 mit mehrfach Überhöhter Leuchtdichte realisierbar. Die minimale Beleuchtungsdauer kann dabei beispielsweise 1 Millisekunde oder geringer sein. Die Auswahl der Pulsdauer erfolgt beispielsweise durch ein wählbares Zeitfenster. Die Ansteuerung der getakteten LED-Lampe 5 erfolgt beispielsweise durch ein motorsynchrones Triggersignal. Die dabei entstehende Wärme kann mit der erfindungsgemäßen Kühlkanalanordnung 7 problemlos abgeführt werden. Dies ermöglicht hohe Standzeiten der Beleuchtungseinheit 1.

Als LED-Lampe 5 kann beispielsweise eine Weißlicht-LED-Lampe zum Einsatz kommen. Insbesondere kann es sich um eine breitbandige Weißlicht-LED-Lampe handeln, die in einem Wellenlängenbereich des sichtbaren Lichts wie beispielsweise 350nm bis 800nm, Licht emittiert. Aber auch eine LED-Lampe 5 mit einem anderen oder schmäleren Wellenlängen-Spektrum kann zum Einsatz kommen.

Das gepulste Betreiben der LED-Lampe 5 kann durch unterschiedliche Parameter definiert werden. Dies sind die Beleuchtungsdauer, die auch Leuchtdauer der LED-Lampe 5 oder Einschaltdauer genannt werden kann, während der die LED-Lampe 5 aktiviert ist und leuchtet. Weiters die Ausschaltdauer - während der die LED-Lampe 5 deaktiviert ist und nicht leuchtet -, wie auch die sich aus diesen beiden Größen ergebende Frequenz des gepulsten Betreibens.

Die Ausschaltdauer ist bevorzugt mindestens gleich lang wie die vorhergehende Einschaltdauer. Besonders bevorzugt ist die Ausschaltdauer mindestens 9 mal länger als die vorhergehende Einschaltdauer.

Als Näherung kann man festhalten, dass der Strom bis zum doppelten Wert gegenüber dem Dauerbetrieb erhöht werden kann, wenn die Einschaltdauer gleich lang ist wie die Ausschaltdauer. Wenn das Verhältnis von Einschaltdauer zu Ausschaltdauer 1:3 beträgt, dann kann bis zum 4-fachen des Stroms des Dauerbetriebs verwendet werden. Wobei diese Hochrechnung auch auf alle anderen Verhältnisse von Einschaltdauer zu Ausschaltdauer angewendet werden kann.

Dabei wird die Ausschaltdauer für die Wärmeabfuhr genutzt, weshalb man die kürzer werdender Einschaltdauer und länger werdender Ausschaltdauer den Strom mit dem die LED-Lampe 5 betrieben wird erhöhen kann, so dass man eine höhere Helligkeit der LED-Lampe 5 erhält.

Beim Einschalten der LED-Lampe 5 ist die maximale Helligkeit erst nach einer sogenannten Anstiegszeit erreicht. Diese hängt von der verwendeten LED-Lampe 5 und der verwendeten Elektronik ab. Daraus leitet sich die bevorzugte minimale Einschaltdauer ab, die dieser Anstiegszeit entspricht. Dadurch hat man am Ende der Einschaltdauer die maximale Helligkeit. Die bevorzugte mindeste Einschaltdauer ist 30 Mikrosekunden.

Durch die bevorzugte mindeste Einschaltdauer von 30 Mikrosekunden und dem besonders bevorzugten Verhältnis, dass die Ausschaltdauer mindestens 9 mal länger als die vorhergehende Einschaltdauer ist, ergibt sich eine bevorzugte maximale Frequenz des gepulsten Betriebs von 3333,3 Hz.

In einem nicht dargestellten Ausführungsbeispiel ist ein weiterer Kühlkanal im Kühlkörper vorgesehen. Dieser weitere Kühlkanal führt (Kühl-)Luft bis zur LED-Lampe 5. Die Luft strömt dort aus, kommt außenseitig mit der LED-Lampe 5 in Kontakt und kühlt diese. Die Luftrückführung kann beispielsweise zwischen dem Kühlkörper 13 und dem rohrförmigen Tragkörper 14 erfolgen.

## Patentansprüche

1. Beleuchtungseinheit (1) für Innenräume von Maschinen, insbesondere von Brennkraftmaschinen, wobei die Beleuchtungseinheit (1) ein Gehäuse (2) aufweist, in welchem zumindest eine durch eine LED-Lampe (5) gebildete Lichtquelle (6) angeordnet ist, wobei das Gehäuse (2) zur Kühlung der Lichtquelle (6) eine Kühlkanalanordnung (7), insbesondere für eine Kühlflüssigkeit, aufweist, wobei ein Kühlabschnitt (8) der Kühlkanalanordnung (7) im Bereich der Lichtquelle (6) angeordnet ist, **dadurch gekennzeichnet, dass** die LED-Lampe (5) gepulst betrieben wird.

2. Beleuchtungseinheit (1) nach Anspruch 1, **dadurch gekennzeichnet, dass** das Gehäuse (2) im Wesentlichen stabförmig ausgebildet ist und ein erstes Ende (3) und ein zweites Ende (4) aufweist, wobei im Bereich des ersten Endes (3) die Lichtquelle (6) angeordnet ist.

3. Beleuchtungseinheit (1) nach Anspruch 2, **dadurch gekennzeichnet, dass** zwischen dem zweiten Ende (4) des Gehäuses (2) und dem Kühlabschnitt (8) zumindest ein Kühlkanal (11, 12), vorzugsweise zwei Kühlkanäle, der Kühlkanalanordnung (7) im Gehäuse (2) angeordnet sind.

4. Beleuchtungseinheit (1) nach Anspruch 2 oder 3, **dadurch gekennzeichnet, dass** im Bereich des zweiten Endes (4) des Gehäuses (2) zumindest ein Anschluss (9, 10) zur Verbindung zumindest eines Kühlkanals (11, 12) der Kühlkanalanordnung (7) mit einer Zuführ- und/oder Abführleitung angeordnet ist.

5. Beleuchtungseinheit (1) nach einem der Ansprüche 2 bis 4, **dadurch gekennzeichnet, dass** das Gehäuse (2) mehrteilig ausgebildet ist und im Bereich des ersten Endes (3) zumindest einen Kühlkörper (13), im Bereich des zweiten Endes (4) zumindest einen Anschlusskörper (15) und zwischen dem Kühlkörper (13) und dem Anschlusskörper (15) zumindest einen im Wesentlichen rohrförmigen Tragkörper (14) aufweist, wobei vorzugsweise der Kühlkörper (13) im Tragkörper (14) eingepresst, eingeklebt oder eingeschraubt ist.

6. Beleuchtungseinheit (1) nach Anspruch 5, **dadurch gekennzeichnet, dass** zumindest ein Anschluss (9, 10) im Anschlusskörper (15) angeordnet ist, wobei vorzugsweise der Anschlusskörper (15) zumindest eine Leitungsdurchführung (16) aufweist.

7. Beleuchtungseinheit (1) nach einem der Ansprüche 1 bis 6, **dadurch gekennzeichnet, dass** ein Kühlkörper (13) im Bereich der Lichtquelle (6) zumindest zwei als Durchgangsbohrungen ausgebildete Teilkühlkanäle (11c, 12c) aufweist, welche parallel zu einer Längsachse (2a) des Gehäuses (2) angeordnet sind und in einen im Kühlkörper (13) im Kühlabschnitt (8) angeordneten Kühlraum (25) einmünden, wobei vorzugsweise der Kühlraum (25) thermisch direkt oder indirekt an eine mit der LED-Lampe (5) verbundene Platine (18) grenzt.

8. Beleuchtungseinheit (1) nach einem der Ansprüche 1 bis 6, **dadurch gekennzeichnet, dass** ein Kühlkörper (13) im Bereich der Lichtquelle (6) zumindest zwei als Sackbohrungen ausgebildete Teilkühlkanäle (11c, 12c) aufweist, welche sich im Kühlabschnitt (8) schneiden.

9. Beleuchtungseinheit (1) nach einem der Ansprüche 1 bis 8, **dadurch gekennzeichnet, dass** zumindest eine Leitungsführung (17a, 17b) für eine elektrische Leitung (19a, 19b) in einem Kühlkörper (13) im Bereich der Lichtquelle (6) räumlich getrennt zu den Teilkühlkanälen (11c, 12c) angeordnet ist, wobei vorzugsweise zumindest eine Leitungsführung (17a, 17b) durch eine - im Wesentlichen parallel zur Längsachse (2a) des Gehäuses (2) ausgebildete Nut (20a, 20b) oder Bohrung (21a, 21b) gebildet ist.

10. Verfahren zum Ausleuchten von Innenräumen von Maschinen, insbesondere von Brennkraftmaschinen, mit einer Beleuchtungseinheit (1) mit einem Gehäuse (2), in welchem zumindest eine durch eine LED-Lampe (5) gebildete Lichtquelle (6) angeordnet ist, wobei die Lichtquelle (6) durch eine im Gehäuse (2) angeordnete Kühlkanalanordnung (7), insbesondere für eine Kühlflüssigkeit, gekühlt wird, **dadurch gekennzeichnet, dass** die LED-Lampe (5) gepulst betrieben wird.

## Claims

1. Lighting unit (1) for interiors of engines, in particular of internal combustion engines, wherein the lighting unit (1) has a housing (2) in which at least one light source (6) formed by an LED lamp (5) is arranged, wherein the housing (2) has a cooling duct arrangement (7), in particular for a cooling liquid, for cooling the light source (6), wherein a cooling section (8) of the cooling duct arrangement (7) is arranged in the region of the light source (6), **characterised in that** the LED lamp (5) is operated in a pulsed manner.

2. Lighting unit (1) according to claim 1, **characterised in that** the housing (2) is substantially rod-shaped and has a first end (3) and a second end (4), wherein the light source (6) is arranged in the region of the first end (3).

3. Lighting unit (1) according to claim 2, **characterised in that** between the second end (4) of the housing (2) and the cooling section (8) at least one cooling duct (11, 12), preferably two cooling ducts, of the cooling duct arrangement (7) are arranged in the housing (2).

4. Lighting unit (1) according to claim 2 or 3, **characterised in that** at least one connection (9, 10) for connecting at least one cooling duct (11, 12) of the cooling duct arrangement (7) to a supply and/or discharge line is arranged in the region of the second end (4) of the housing (2).

5. Lighting unit (1) according to one of claims 2 to 4, **characterised in that** the housing (2) is of multi-part design and has at least one heat sink (13) in the region of the first end (3), at least one connection body (15) in the region of the second end (4) and at least one essentially tubular support body (14) between the heat sink (13) and the connection body (15), wherein preferably the heat sink (13) is pressed, glued or screwed into the support body (14).

6. Lighting unit (1) according to claim 5, **characterised in that** at least one connection (9, 10) is arranged in the connection body (15), wherein preferably the connection body (15) has at least one line bushing (16).

7. Lighting unit (1) according to one of claims 1 to 6, **characterised in that** a heat sink (13) has in the region of the light source (6) at least two partial cooling ducts (11c, 12c) which are designed as through bores, are arranged parallel to a longitudinal axis (2a) of the housing (2) and open into a cooling chamber (25) arranged in the cooling section (8) of the heat sink (13), wherein preferably the cooling chamber (25) is thermally directly or indirectly adjacent to a circuit board (18) connected to the LED lamp (5).

8. Lighting unit (1) according to one of claims 1 to 6, **characterised in that** a heat sink (13) in the region of the light source (6) has at least two partial cooling ducts (11c, 12c) in the form of blind bores which intersect in the cooling section (8).

9. Lighting unit (1) according to one of claims 1 to 8, **characterised in that** at least one line guide (17a, 17b) for an electrical line (19a, 19b) in a heat sink (13) is arranged in the region of the light source (6) spatially separated from the partial cooling ducts (11c, 12c), wherein preferably at least one line guide (17a, 17b) is formed by a groove (20a, 20b) or bore (21a, 21b) formed substantially parallel to the longitudinal axis (2a) of the housing (2).

10. Method for illuminating interiors of machines, in particular of internal combustion engines, having a lighting unit (1) with a housing (2) in which at least one light source (6) formed by an LED lamp (5) is arranged, wherein the light source (6) is cooled by a cooling duct arrangement (7) arranged in the housing (2), in particular for a cooling liquid, **characterised in that** the LED lamp (5) is operated in a pulsed manner.

## Revendications

1. Unité d'éclairage (1) pour l'intérieur de machines, notamment de moteurs à combustion interne
- l'unité d'éclairage (1) comprenant un boîtier (2) logeant au moins une source lumineuse (6) formée par une lampe LED (5),
- le boîtier (2) comporte un dispositif de canal de refroidissement (7) notamment pour un liquide de refroidissement servant à refroidir la source lumineuse (6)
- un segment de refroidissement (8) du dispositif de canal de refroidissement (7) est prévu dans la région de la source lumineuse (6), unité **caractérisée en ce que**
la lampe LED(5) est activée de manière pulsée.

2. Unité d'éclairage (1) selon la revendication 1,
**caractérisée en ce que**
le boîtier (2) a essentiellement une forme de tige et comporte une première extrémité (3) et une seconde extrémité (4),
la source lumineuse (6) étant dans la région de la première extrémité (3).

3. Unité d'éclairage (1) selon la revendication 2,
**caractérisée en ce que**
un canal de refroidissement (11,12) de préférence deux canaux de refroidissement du dispositif de refroidissement (7) sont prévus dans le boîtier (2) entre la seconde extrémité (4) du boîtier (2) et le segment de refroidissement (8).

4. Unité d'éclairage (1) selon la revendication 2 ou 3,
**caractérisée en ce que**
au moins un branchement (9,10) pour relier au moins un canal de refroidissement (11,12) du dispositif de canal de refroidissement (7) est muni d'une conduite d'alimentation et/ou d'évacuation dans la région de la seconde extrémité (4) du boîtier (2).

5. Unité d'éclairage (1) selon l'une des revendications 2 à 4,
**caractérisée en ce que**
le boîtier (2) est en plusieurs parties et dans la région de la première extrémité (3) et
est prévu au moins un organe de refroidissement (13), dans la région de la seconde extrémité (4), il est prévu au moins un organe de raccordement (15) et entre l'organe de refroidissement (13) et l'organe de raccordement (15), il est prévu au moins un organe de support (14) de forme principalement tubulaire,
de préférence l'organe de refroidissement (13) est enfoncé de force, collé ou visé dans l'organe de support (14).

6. Unité d'éclairage (1) selon la revendication 5,
**caractérisée en ce que**
au moins un branchement (9,10) est prévu dans l'organe de raccordement (15),
l'organe de raccordement (15) comporte de préférence au moins un passage de conduite (16).

7. Unité d'éclairage (1) selon l'une des revendications 1 à 6,
**caractérisée en ce que**
un organe de refroidissement (13) comporte dans la région de la source lumineuse (6) au moins deux canaux partiels de refroidissement (11c, 12c) réalisés sous la forme de perçages traversants, parallèles à l'axe longitudinal (2a) du boîtier (2) et débouchant dans une chambre de refroidissement (25) prévue dans le segment de refroidissement (8) de l'organe de refroidissement (13),
la chambre de refroidissement (25) est délimitée de préférence directement ou indirectement par une platine (18) reliée à la lampe LED (5).

8. Unité d'éclairage (1) selon l'une des revendications 1 à 6,
**caractérisée en ce que**
un organe de refroidissement (13) dans la région de la source lumineuse (6) comporte au moins deux canaux partiels de refroidissement (11c, 12c) réalisés sous la forme de perçages borgnes qui se coupent dans le segment de refroidissement (8).

9. Unité d'éclairage (1) selon l'une des revendications 1 à 8,
**caractérisée en ce que**
au moins un passage de câble (17a, 17b) pour un câble électrique (19a, 19b) est prévu dans l'organe de refroidissement (13) dans la région de la source lumineuse (6) en étant séparé dans l'espace par rapport aux canaux partiels de refroidissement (11c, 12c),
de préférence au moins un passage de câble (17a, 17b) traverse une rainure (20a, 20b) ou un perçage (21a, 21b) pratiquement parallèle à l'axe longitudinal (2a) du boîtier (2).

10. Procédé d'éclairage de l'intérieur de machines, notamment de moteur à combustion interne comportant une unité d'éclairage (1) ayant un boîtier (2) logeant une source lumineuse (6) formée par au moins une lampe LED (5)
- la source lumineuse (6) étant refroidie par un dispositif de canal de refroidissement (7) prévu dans le boîtier (2) notamment pour un liquide de refroidissement,
procédé **caractérisé en ce que**
on active la lampe LED (5) de manière pulsée.
